# EUROPEAN PATENT APPLICATION

(11) **EP 1 598 810 A2**
(43) Date of publication of application: **23.11.2005**
(21) Application number: 05253111.8
(22) Date of filing: 19.05.2005
(51) Int. Cl.: G10L 15/22

(54) **System for conducting a dialogue**

(30) Priority: 21.05.2004 GB 0411377
(71) Applicant: The Queen's University of Belfast, Belfast BT7 1NN (GB)
(72) Inventor: O'Neill, Ian Michael, Glengormley BT36 6DG (GB); Hanna, Philip James, Dundonald Belfast BT16 1GN (GB)
(74) Representative: Jones, Keith William

(57) **Abstract**

A system for conducting a dialogue with a user comprising:
an assignment unit, a plurality of processing units each of which comprise one or more processing rules, and a plurality of data storage units;
wherein the assignment unit receives a communication from a user, assigns the communication to a processing unit according to the communication's semantic content and stores information relating to the communication in a data storage unit; and
the assigned processing unit processes the communication in accordance with the processing unit's processing rules and provides a response to the user.

## Description

### Field of the Invention

The present invention relates to a dialogue manager and in particular a dialogue manager that implements a cross-domain or multi-topic, mixed initiative dialogue management strategy.

### Background of the Invention

An automatic dialogue system is a tool developed to assist telephone callers in completing a transaction in a well-defined business domain. A dialogue manager is a component of an automatic dialogue system that implements strategies to control the nature and sequence of interactions between the user and the automatic dialogue system.

There are two main forms of dialogue management strategies, namely system initiative and mixed initiative strategies. In a system initiative dialogue management strategy the dialogue manager controls dialogue flow and the user is restricted to merely answering the questions of the automatic dialogue management system (e.g. a touch-tone, fixed option, call-answering service). In contrast, a mixed initiative dialogue management strategy allows both the dialogue manager and the user to take control of a dialogue. In particular, mixed-initiative interactions allow the user the freedom to spontaneously express their intentions in a more natural conversational form.

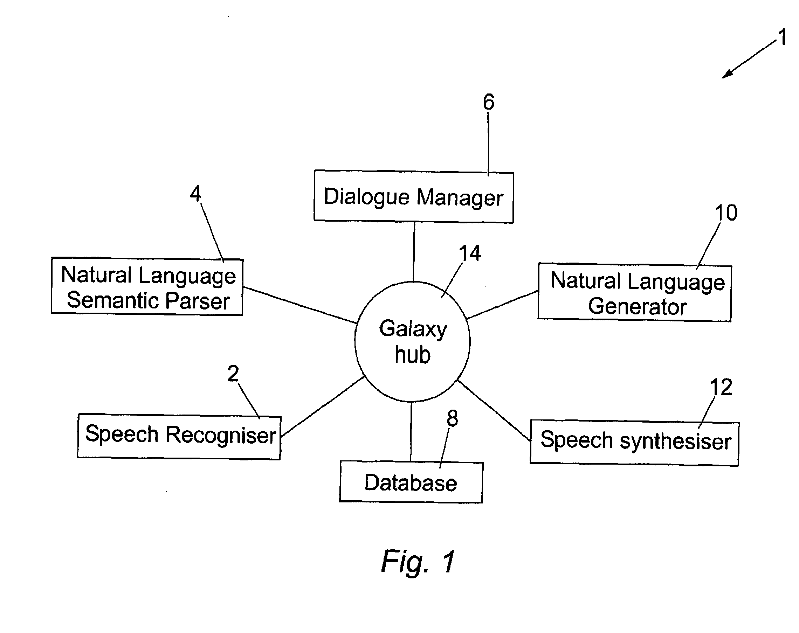

Since the present invention relates to a dialogue manager that implements a mixed initiative dialogue management strategy, it is useful at this point to briefly review the software architecture of an automatic dialogue system and the role of a dialogue manager therein. Furthermore, since a DARPA Communicator system is used in an implementation of the present invention, the following section will refer to accompanying Figure 1 to briefly describe the architecture of this automatic dialogue system. The following discussion will also briefly discuss the processes involved in mixed initiative exchanges and the current state of the art in this area.

### A. Structure of an Advanced Spoken Dialogue System

An end-to-end automatic dialogue system must:
(a) recognise the words that a user says;
(b) attempt to determine the intention behind the user's words;
(c) decide how to respond to the user's utterance (sometimes using information from a database);
(d) generate a 'conceptual' response as a well-formed natural language phrase; and
(e) utter the phrase as synthesised or concatenated speech.

Referring to Figure 1 an end-to-end automatic dialogue system 1 typically comprises an automatic speech recogniser 2, a natural language semantic parser 4, a decision unit (known as the dialogue manager) 6, a database 'back-end' 8, a natural language generator 10 and a text-to-speech engine 12. In use, the semantic parser 4 employs semantic grammars created by the developer to generate text-based semantic representations of key concepts in a user's utterance. In a similar fashion, the natural language generator 10 requires rules (from the developer) for translating semantic representations from the dialogue manager 6 into natural language utterances.

The dialogue manager 6 decides on the appropriate response to be issued by the automatic dialogue system 1 to a specific user utterance. In particular, once a user utterance has been detected by the automatic dialogue system 1, the dialogue manager 6 decides whether the automatic dialogue system 1 should respond by:
(a) confirming what the user has said;
(b) checking to see if the user's request can be fulfilled (e.g. is there a train scheduled for the requested day and time?); or
(c) asking the user for more information.

However, it should be noted that the dialogue manager 6 might perform the combined operations of confirmation, validation and further information requests in a single dialogue turn.

DARPA Communicator systems use a 'hub-and-spoke' architecture to facilitate interaction between the different automatic dialogue system 1 modules. In particular, each module in a DARPA Communicator system communicates with the other modules through a central software router, known as the *Galaxy* hub 14 with the information passed to each module being routed through the Ga*laxy* hub 14 in the form of "hubframes". To facilitate this process, the system developer creates a "hubscript" to ensure that a hubframe requesting a particular service is routed to the appropriate module. Where necessary, the hubscript also ensures that the interaction between the modules is appropriately sequenced.

### B. Mixed Initiative Dialogue Management Strategy

As previously mentioned, in a mixed initiative dialogue management strategy a user is free to provide whatever information they deem appropriate at a particular dialogue turn (for instance, a user may start to ask about events whilst booking accommodation). Consequently, when implementing a mixed initiative dialogue management strategy that deals with multiple conversation topics, the complexity of the dialogue management process is increased as the dialogue manager 6 has the additional task of identifying the ongoing dialogue topic and applying the appropriate dialogue management expertise thereto.

Dialogue managers 6 have traditionally failed to distinguish generic from domain-specific behaviour. Although some currently available dialogue managers do employ object components (Allen et al., Natural *Language Engineering 2000, 6(3-4*), 1-16), there has been little research into the question of how established techniques of object-oriented software engineering can contribute to the dialogue management task. In particular, whilst some prior art systems have employed agents for dialogue management, these agents typically perform comparatively simple tasks rather than engage in extensive discourse (M. Turunen and J. Hakulinen, *Text Speech and Dialogue - Proceedings of the Fourth International Conference TSD,* pp. 357-364, 2001).

### Summary of the Invention

According to the invention there is provided a system for conducting a dialogue with a user comprising:
an assignment unit, a plurality of processing units each of which comprise one or more processing rules, and a plurality of data storage units;
wherein the assignment unit receives a communication from a user, assigns the communication to a processing unit according to the communication's semantic content and stores information relating to the communication in a data storage unit; and
the assigned processing unit processes the communication in accordance with the processing unit's processing rules and provides a response to the user.

Preferably, the processing units further comprise at least one domain-independent confirmation rule for confirming the user's communication.

Preferably, individual processing units are adapted to perform tasks of different specificities.

Desirably, the processing rules of each processing unit reflect the specificities of the tasks they perform.

Desirably, processing units are hierarchically organised according to the specificity of their processing rules.

Preferably, processing units with more specialised processing rules are substantially independent of those with less specialised processing rules.

Preferably, the processing rules of each processing unit comprise one or more rules for triggering specific responses to particular combinations of information supplied by the user.

Preferably, the processing rules of the processing units comprise one or more rules for modifying one or more constraints supplied by the user for performing a search of the data repositories.

Preferably, the data storage units are adapted to store information of corresponding specificity to the tasks performed by the processing units.

Desirably, the data storage units are hierarchically organised according to the specificity of the information they are adapted to store.

Desirably, the data processing units store information derived from each communication from the user and each communication by the system to the user.

Desirably, information derived from each user communication is stored in a data storage unit in accordance with the specificity of the tasks performed by the processing unit to which the user communication was assigned.

Preferably, information derived from each communication by the system to the user is stored in a data storage unit in accordance with the specificity of the task performed by the processing unit that generated the communication.

Preferably, the identity of each data storage unit into which information is stored at each communication by the user or the system is stored in a stack.

Preferably, the identities of data storage units are stored in the stack in the order in which data is stored in them during the dialogue.

Desirably, the information stored in the data storage units in accordance with each communication of the user comprises information regarding the type and identity of the information, the extent to which the information was confirmed by the system and the system's intention for the further processing of the information.

Desirably, the information stored in the data storage units during each by the user or the system contains links to other data storage units.

Desirably, the assignment unit is capable of detecting a shift between the subject-matter of a first communication by the user and a second communication by the user during the dialogue.

Preferably, the assignment unit assigns the first communication to a first processing unit according to the communication's semantic content and assigns the second communication to a second processing unit, being of different identity to the first processing unit, in the event that the subject-matter of the second communication differs from that of the first communication.

Preferably, the assignment unit is capable of deferring the assignment of the second communication to the second processing unit until the first processing unit has completed its task.

Preferably, the system is capable of retrieving information stored in at least one of the data storage units as a result of an earlier communication by the user or system and combining this information with information derived from a current communication by the user or system.

Desirably, the data storage units are created during each communication of the dialogue.

Desirably, the system possesses an object-oriented design.

Desirably, the system is adapted to operate within a DARPA Communicator system.

Preferably, the system is developed in Java.

According to a second aspect of the invention there is provided a method of conducting a dialogue with a user comprising the steps of:
(a) receiving a communication from the user;
(b) assigning the communication to one of a plurality of processing units, each of which comprises one or more processing rules, in accordance with the semantic content of the communication;
(c) storing information from the communication in one or more data-storage units;
(d) using one or more of the processing rules of the assigned processing unit to process the communication;
(e) forwarding a response to the user; and
(f) repeating the above steps until the user fails to issue further communications or indicates that the dialogue is terminated.

Preferably, the step of processing the user's communication comprises the further steps of:
(d1) requesting further information from the user if needed; and
(d2) accessing a data repository if needed.

Preferably, the method includes a further step of confirming the communication from the user before processing the communication in accordance with the one or more processing rules of the assigned processing unit.

Preferably, the step of confirming the user's communication comprises an implicit or an explicit confirmation.

Preferably, the method includes a step of retrieving information from a previous communication stored in one or more of the data-storage units and combining the information with information from the current communication to enable the completion of a task associated with the previous communication.

According to a third aspect of the invention there is provided an automatic booking system employing the system for conducting a dialogue from the first aspect of the invention.

Preferably, the one or more data repositories contain information regarding accommodation.

Preferably, the one or more data repositories contain information regarding current events.

Preferably, the processing units includes at least one processing unit adapted to acquire payment details from a user.

According to a fourth aspect of the invention there is provided a vehicle control system employing the system for conducting a dialogue with a user from the first aspect of the invention.

### Object of the Invention

The object of the invention is to overcome the problems in the prior art.

### Advantages of the Invention

For the sake of brevity, the dialogue manager of the present invention will be known henceforth as the improved dialogue manager.

The improved dialogue manager is unique over prior art dialogue managers insofar as it is based on, and implements, object oriented design principles to intuitively decompose the cross-domain dialogue management task. Object-oriented (OO) design enables the separation of inheritable generic functionality from domain-specific, specialised functionality (wherein the domain-specific functionality is supported by the generic functional elements).

The domain-specific functionality of the improved dialogue manager is provided by a cohort of agents. Each agent is a specialist in a particular transactional area and uses its own domain-specific expert rules to encapsulate a skill-set for a substantial dialogue or sub-dialogue and elicits information that is stored in a specialised dialogue frame. However, by using inheritance a common approach to dialogue management is established, wherein each agent inherits the same confirmation strategy independent of its domain speciality. In contrast with the simple agent designs of prior art dialogue managers, the cohort of agents employed in the improved dialogue manager are specifically designed to collaborate with each other to detect and facilitate user-led changes in conversational topic.

Within a given agent class, agents are structured in a hierarchy reflecting the increased specialisation of the tasks they perform. However, it is a key aspect of the improved dialogue manager's design that higher-level agents are largely ignorant of the precise capabilities of lower level agents. The functional dissociation between the higher-level agents and the lower level agents enables additional lower level expertise to be added to the system without altering the pre-existing higher-level behaviour. Consequently, this design feature enhances the robustness and scalability of the improved dialogue manager and facilitates the convenient incorporation of additional features to the improved dialogue manager in accordance with the demands of specific applications.

The improved dialogue manager also provides a facility whereby a user-driven shift in conversational topic can be deferred until a current information-gathering task is completed. This facility is provided by rules controlling transfers between different agents and assists the improved dialogue manager in maintaining discourse context by preventing interruptions to a given data elicitation task.

Furthermore, the improved dialogue manager provides a facility whereby the dialogue manager may retrieve information collected at an earlier point in a dialogue to assist in a current query.

The above features of the improved dialogue manager enable a discourse structure and corresponding dialogue product to evolve dynamically, as agents are selected in light of the user's utterances or as a consequence of the agents' own rules. It is this process, rather than an over-arching dialogue plan or agenda that drives the discourse forward, and across domain boundaries if required by the user.

### Description and Drawings

An embodiment of the invention will now be described by way of example only, with reference to the accompanying Figures and Table in which:
Figure 2a is a block diagram showing the hierarchy of the functional components (also known as the expertise hierarchy) of the improved dialogue manager;
Figure 2b is a block diagram showing the hierarchy of the knowledge-storing components (also known as the knowledge hierarchy) in the improved dialogue manager;
Figure 3 is a block diagram showing the manner in which the information resulting from an evolving dialogue comprising an accommodation query is stored in the improved dialogue manager;
Figure 4 is a flow diagram of the strategy used by the improved dialogue manager for identifying an appropriate handling agent during a dialogue session;
Figure 5 shows a dialogue tree generated during a dialogue session by the improved dialogue manager;
Figure 6 is a flow chart showing the process by which a database request by a domain-specific Expert of the improved dialogue manager is transmitted through the *Galaxy* hub to, and processed by, a "back-end" database;
Figure 7 is a block diagram showing the interplay between generic and domain specific behaviour in the improved dialogue manager; and
Table 1 is a table of the components of a typical *Attribute* object in a dialogue frame of the improved dialogue manager.

The improved dialogue manager will be described by way of example in an accommodation and event booking and payment system. It will be appreciated that the improved dialogue manager could also be used in other automatic dialogue systems such as those used for verbal control of a vehicle or route-guidance systems or other transactional systems.

Reflecting the object-oriented design methodology of the improved dialogue manager, the following discussion will be divided into an analysis of the structural aspects and the functional aspects of the improved dialogue manager. In particular, the following discussion will first describe the software architecture of the improved dialogue manager and focus on the structural features that provide for the differentiation between the generic and specific functional behaviours of the improved dialogue manager.

The following discussion will then describe the functional aspects of the improved dialogue manager. In particular, the following discussion will describe the following functional features:
(a) the generic confirmation strategy;
(b) the mechanism by which appropriate domain-specific agents are identified for specific user utterances;
(c) the mechanism by which the improved dialogue manager facilitates user-driven changes in topic; and
(d) the mechanism by which the improved dialogue manager defers particular user-led changes in topic to prevent the interruption of a current information-gathering task.

Having described the structural and functional aspects of the improved dialogue manager, the following discussion will then describe how the improved dialogue manager is integrated into the DARPA communicator system. The following discussion will conclude with an example operational scenario of a dialogue between the improved dialogue manager and a user.

### SOFTWARE ARCHITECTURE OF DIALOGUE MANAGEMENT SYSTEM

### A. General Overview

As previously mentioned, the improved dialogue manager employs object oriented design principles to separate inheritable generic behaviour from domain-specific behaviour. The generic behaviour in the present example is a confirmation strategy that supports domain-specific behaviour in gathering and providing information relating to particular transactions. However, it will be recognised that for different applications other additional generic behaviours may exist.

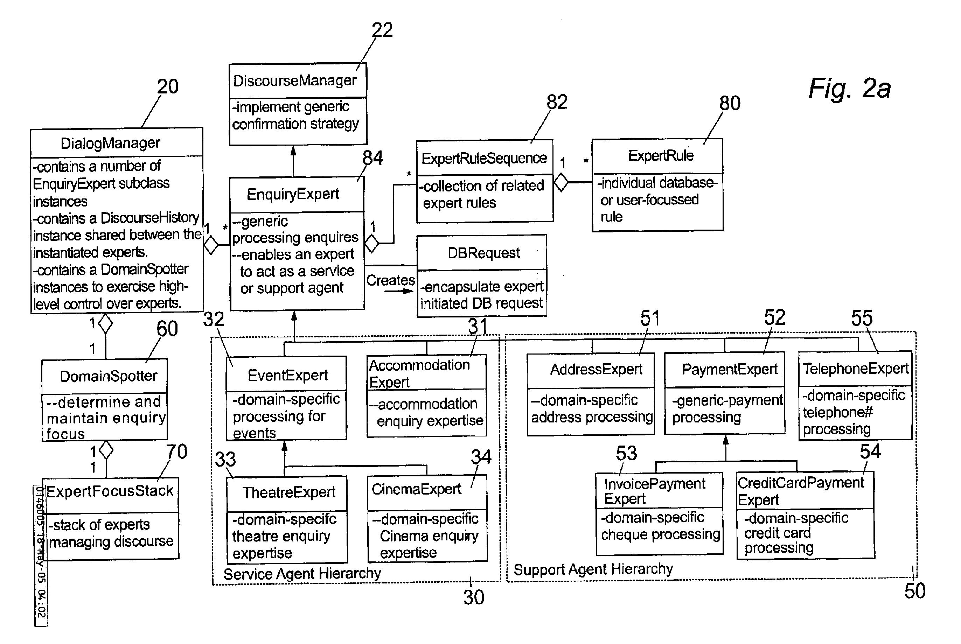

Referring to Figure 2a, the domain-specific behaviour of the improved dialogue manager is provided by a number of domain-specific dialogue components (i.e. agents) known as Experts. These agents encapsulate 'expert rules' that either represent know-how usable in a number of business domains (e.g. how to elicit credit card details) or specific business domain rules.

The agents in the improved dialogue manager can be divided into those that provide front-line business functions (i.e. service agents) and those that provide ancillary data acquisition support services (support agents).

The service and support agents are collectively known as the Expertise Hierarchy wherein individual service and support agents are hierarchically organised according to the specialisation of their expert rules.

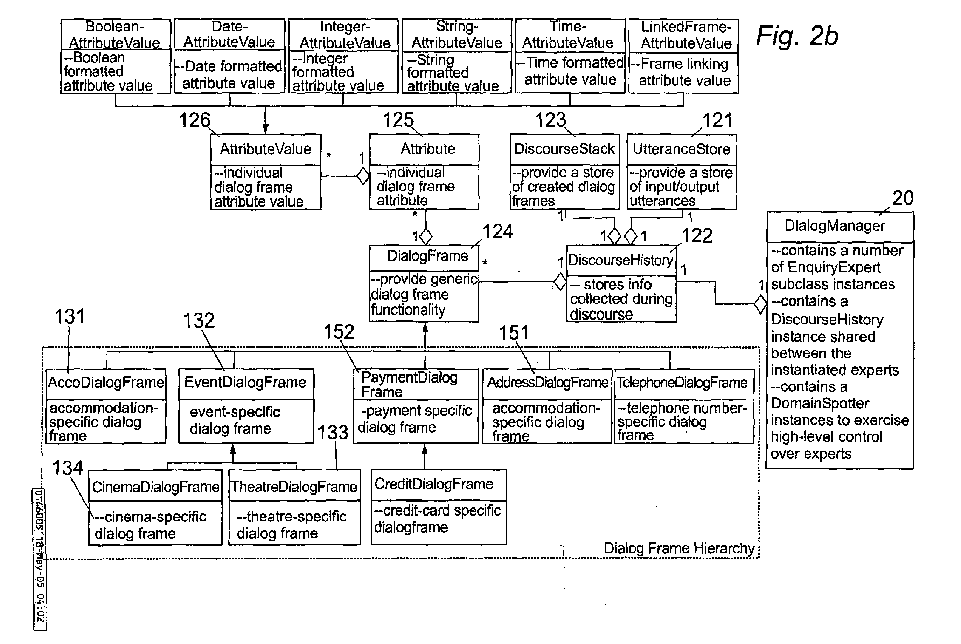

Referring to Figure 2b, the improved dialogue manager further comprises components for storing information acquired or generated during a dialogue session. In particular, the knowledge-storing components store data values elicited by the system from the user, or inferred by the system itself, in the course of a dialogue. These components can be collectively described as the Knowledge Hierarchy.

The components in the Knowledge Hierarchy also maintain information that indicates how confirmed each datum is, and what the system intends to do (if anything) to confirm that datum adequately. The data values stored in the knowledge-storing elements are the system's discourse knowledge, and are used by components of the Expertise Hierarchy as they prepare system utterances in accordance with their generic and domain specific rules.

### B. Detailed Analysis of Dialogue Manager Software Architecture

### (i) Front-Line Functional Elements (i.e. Agents)

Referring to Figure 2a, as previously discussed the improved dialogue manager 20 comprises a series of specialised functional elements (i.e. agents) known as "Experts" that inherit generic behaviour from a generic functional element, known as a *DiscourseManager* 22. Each agent further encapsulates a set of *ExpertRules* 60 that encode the agent's domain-specific behaviour.

Following the order of inheritance of the improved dialogue manager 20, the following description will first discuss the structures and operations of the *DiscourseManager* 22 and will then consider the structure and operations of the Experts.

### (a) DiscourseManager 22

The *DiscourseManager* 22 is responsible for the improved dialogue manager's 20 overall 'conversational style', (i.e. the generic discourse behaviour of the improved dialogue manager 20). Given the current technical difficulties with speech recognition and the possibility that a user will misunderstand or change their mind during a dialogue, any system conducting a complex transaction must have a strategy for confirming the semantic contents of a user's utterances.

The *DiscourseManager* 22 determines the response of the improved dialogue manager 20 to new, modified or negated information from the user. In the case of new or modified information, the *DiscourseManager 22* ensures that the information is at least implicitly confirmed. In an implicit confirmation strategy a recognised answer in a previous utterance is embedded in the system's next question (e.g. "So, you're arriving at the Hilton in Belfast on Friday").

The *DiscourseManager* 22 further ensures that the receipt of a confirmatory response by the user is immediately followed by a question requesting further information (e.g. " what day are you departing?"). However, it will of course be realized that towards the end of a dialogue session, the system may have all the information it requires to conclude the transaction. Consequently, in this case, the receipt of a confirmatory response is not followed by another question for further information.

In the event that the user has negated information previously recorded by the improved dialogue manager 20, the *DiscourseManager* 22 ensures that the information provided by the user is subjected to more detailed explicit confirmation.

### (b) Domain-Specific Experts

### (1) Overview

For any given application, an automatic dialogue system must be capable of performing the following functions for each required business area:
(a) deciding what information to elicit next, or infer, bearing in mind that certain information may already have been provided;
(b) checking the validity of the combinations of information provided;
(c) giving the most helpful guidance when the user is having difficulty completing the enquiry; and
(d) deciding when sufficient confirmed information has been provided to conclude a transaction.

While the generic confirmation strategy provided by the *DiscourseManager* 22 ensures that information newly supplied by the user is confirmed (and information changed is re-confirmed etc.), the nature of that information may differ significantly from domain to domain. Similarly, the automatic dialogue system may respond to confirmed information in different ways depending on the domain, as it either completes a domain-specific transaction or attempts to elicit missing information from the user.

As previously mentioned, domain-specific agents known as Experts provide the facility for dealing with different transaction domains in the improved dialogue manager 20. As will further be recalled, the agents can be divided into those that provide front-line business functions (i.e. service agents 30) and those that provide ancillary data acquisition support (support agents 50) for the front-line service transactions.

In the present example, the class of service agents 30 include an *AccommodationExpert* 31 and an *EventExpert* 32 that are respectively responsible for searching for and booking accommodation and event tickets. In addition, the class of support agents 50 include an *AddressExpert* 51 and a *PaymentExpert* 52 that are respectively responsible for acquiring the user's address and payment details. It will of course be appreciated that other service and support agents could be included into the improved dialogue manager 20 in accordance with the demands of specific applications.

Within any class of service or support agents 30, 50 there may be further child or grandchild agents that facilitate even more specialised transactions. For example, the service agent *EventExpert* 32 has children TheatreExpert 33 and *CinemaExpert* 34. However, it is a key aspect of the improved dialogue manager's 20 design that higher-level agents (e.g. *EventExpert* 32) are largely ignorant of the precise capabilities of the lower level components (e.g. *CinemaExpert* 34).

The functional dissociation between the higher-level agents and the lower-level agents enables additional lower-level expertise to be added to the improved dialogue manager 20 without altering its pre-existing higher-level behaviour. Consequently, this design feature enhances the robustness and maintainability and scalability of the improved dialogue manager 20.

So that its area of expertise can be identified, each agent has, as one of its attributes, a vector detailing the agent's area of expertise. The specific mechanism for identifying the Expert most suited to a particular transaction is discussed later in the description of the operation of the improved dialogue manager 20.

### (2) Domain Specific Heuristics

Agents, whether they provide service or support, collect and manipulate frames of information related to their own sphere of competence wherein the expertise for different transaction domains is maintained in the form of domain-specific heuristics (i.e. *ExpertRules* 60) encapsulated within corresponding agent classes.

In the improved dialogue manager there are three kinds of Expert rule sequences, namely user-focussed rules, database-focussed rules and housekeeping rules. Each of these Expert rule sequences is described in more detail below.

### (2a) User-focussed Rules

User-focussed rules are Expert rules that are used to trigger the improved dialogue manager's 20 response to specific confirmed combinations of information supplied by the user. The user-focussed rules may cause the improved dialogue manager 20 to ask for more information, or initiate a database search.

### Example 1:

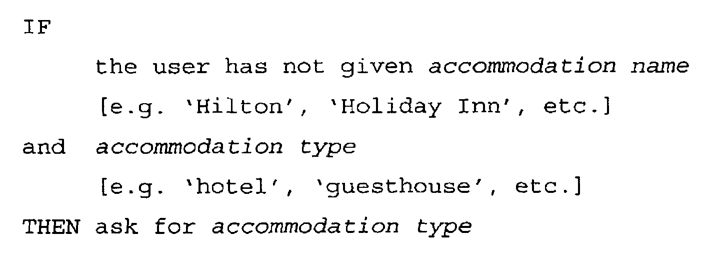

### (2b) Database-focussed Rules

Database-focussed rules are Expert rules that are applied in the light of the improved dialogue manager's 20 failed attempts to retrieve information from, or validate information against, a "back-end" database. These failed searches may result from a particular combination of search constraints imposed by the user or by the improved dialogue manager 20 when it attempts to retrieve information to assist the user.

Database-focussed rules represent recovery strategies that enable the improved dialogue manager 20 to offer viable alternatives when an enquiry might otherwise reach an impasse. For instance, since an agent has access to the content of the back-end" database, the agent may be able to modify a user-supplied constraint in light of the content of the "back-end" database and so formulate a query that will succeed. For example, an agent might suggest a four star hotel if it cannot meet the user's request for a five-star hotel in a particular locality. In this case, the database-focussed rules have recommended that the constraint regarding the required class of hotel be relaxed in order to get a database match for the other user requirement namely, the hotel location.

Nonetheless, the user remains free to reformulate an enquiry in a way that differs from the improved dialogue manager's 20 suggestion. Indeed, in circumstances where the improved dialogue manager 20 has no specific recommendation to make, it will simply explain to the user why the database search has failed and pass the initiative back to the user.

### Example 2:

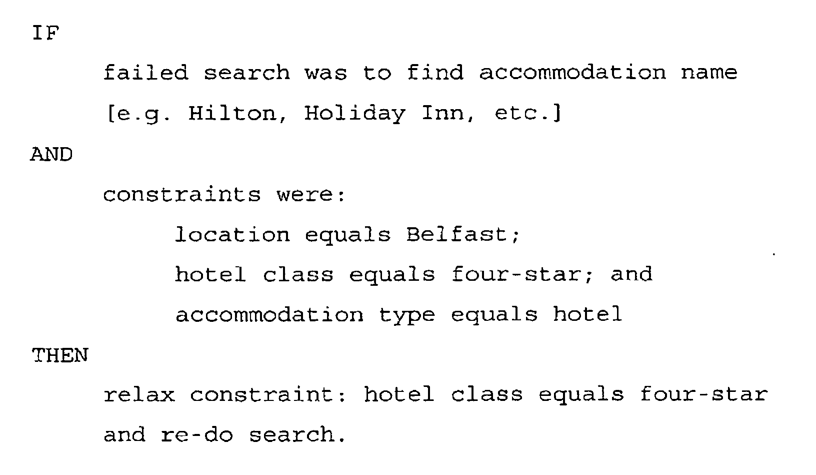

### (2c) Housekeeping Rules

In the event that the user changes key information in an enquiry (i.e. information needed to complete a transaction), the improved dialogue manager 20 resets the enquiry. Housekeeping rules relate to flags used to record the user's intention to proceed with a transaction, as well as flags used to record the improved dialogue manager's 20 own intention to announce the conclusion of the transaction.

At critical junctures in the discourse, the effect of the housekeeping rules is to allow the improved dialogue manager's 20 normal confirmation strategies to be re-applied (e.g. if the user has given all key values required to complete the transaction, then explicitly confirm those values), and to allow the user to reconfirm that they wish to proceed with the transaction.

Housekeeping rules can be written for all key values in a transaction, and in any of its dialogue turns the improved dialogue manager 20 will perform as much housekeeping as is necessary to take account of the current discourse state. In effect, housekeeping rules prevent the conclusion of discourses on the basis of inadequately confirmed user-intentions.

### Example 3:

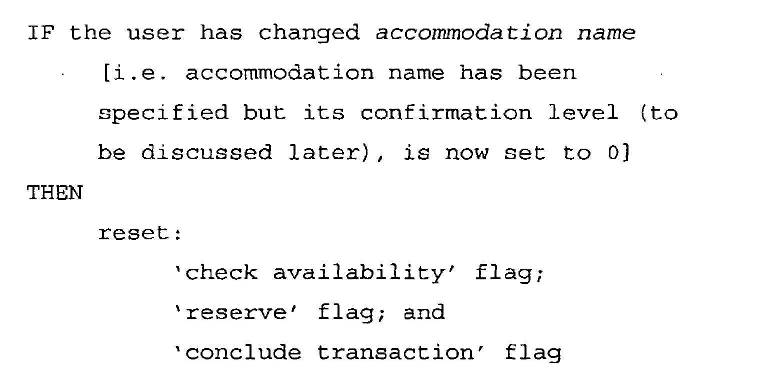

### (2d) Encoding the Domain Specific Heuristics

Within each agent, each rule is specified declaratively. For instance, the example of the user-focussed rule provided above (i.e. Example 1) is encoded as follows:

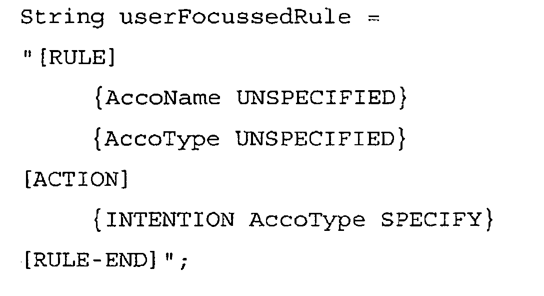

Specifying rules declaratively in this manner recreates some of the intuitiveness of rule-based programming insofar as the suite of rules can be easily extended or reduced to capture the subtlety of human behaviour.

### (ii) Knowledge-Storing Components

### (a) Structure

The knowledge hierarchy depicted in Figure 2b describes the manner in which information is stored within the improved dialogue manager 20. In particular, referring to Figures 2a and 2b, the *DiscourseManager* 20 (i.e. the generic functional element) uses a *DiscourseHistory* data class 122 to maintain a record of the evolving dialogue in the form of a stack (i.e. the *DiscourseStack* 123) of dialogue frames that can be added to or retrieved from the *DiscourseStack* 123 as required.

In a similar fashion to the hierarchical structuring of the service and support agents shown in Figure 2a, dialogue frames are hierarchically structured according to the specialisation of the information they contain. Furthermore, generic informational content is encoded within a generic *DialogFrame* object 124 and inherited by the more specialised dialogue frames. In particular, *DialogFrame* establishes the generic structure of a dialogue frame that is inherited by more specialised dialogue frames.

For example, referring to Figure 2b, *AccoDialogFrame* 131, *EventDialogFrame* 132, *AddressDialogFrame* 151 and PaymentDialogFrame 152 are the children of the generic *DialogFrame* object 124 and are also the dialogue frames respectively dedicated to storing accommodation, event, address and payment information. Similarly, *CinemaDialogFrame* 134 and *TheatreDialogFrame* 133 are children of the *EventDialogFrame* 132 and are respectively dedicated to storing information relating to cinema and theatre events respectively.

The generic *DialogFrame* object 124 is comprised of a set of *Attribute* objects 125 which correspond to a series of slots that must be filled to complete a transaction in a particular domain. Table 1 gives an overview of the typical structure of an Attribute object 125. Each Attribute object 125 has in effect its own set of Java attributes (known as "att-atts") which include the name and value of the Attribute variable and its confirmation status. The generic *DialogFrame* object 124 is also provided with methods that enable calling objects to inter *alia addAttribute(), getAttribute(), creatAttribute()* and *setidentifier*()*.*

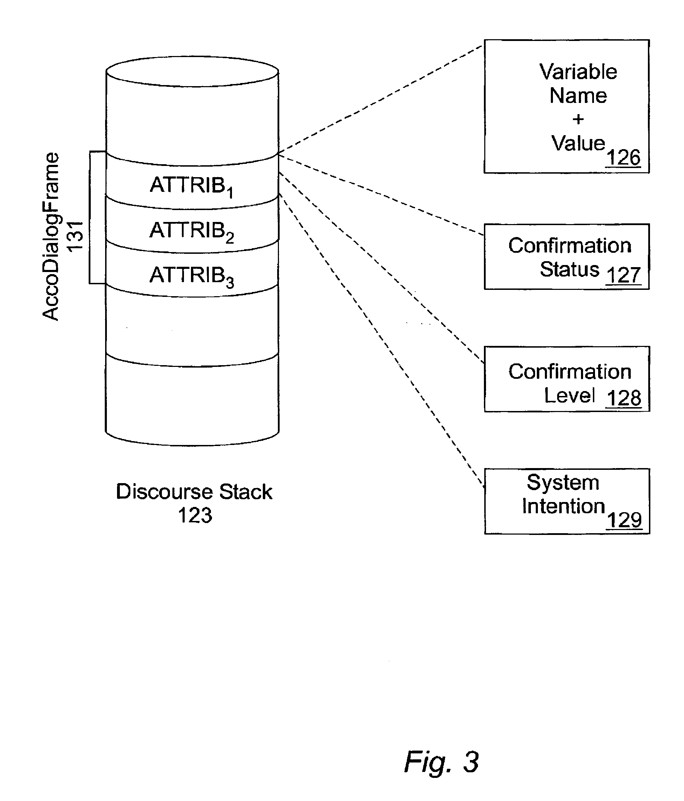

Figure 3 shows the Attribute objects of *AccoDialogFrame* 131 (i.e. the dialogue frame dedicated to the storage of accommodation information). In this example, *AccoDialogFrame* 131 comprises Attribute objects Attrib₁-Attrib₇, wherein each Attribute object stores the following variables:
(1) the name (e.g. accommodation name/class) and elicited value of a datum 126;
(2) the confirmation status of the datum 127;
(3) the level to which the datum has been confirmed 128; and
(4) the system intention regarding the datum 129. (e.g. implicitly confirm new information; explicitly confirm information that has been negated; or ask the user to specify information that is still required).

Specialised dialogue frames are also provided with tags to identify their areas of specialisation. These tags are used to match a specialised dialogue frame with a corresponding service or support agent. For instance, *AddressDialogFrame* 151 is used for storing address information acquired by the *AddressExpert* 51.

The above-described information-storage mechanism enables the improved dialogue manager 20 to store the dialogue product (i.e. the information elicited during the evolving dialogue of a dialogue session) in a tree-like structure (henceforth known as the knowledge tree). The tree-like structure of the dialogue product emerges from the fact that a dialogue frame may include as part of its Attributes, links to dialogue frames of other types (e.g. *TheatreDialogFrame* 133 may include a link to a *PaymentDialogFrame* 152).

The knowledge trees generated by prior art dialogue managers typically comprise individual data items (A. Rudnicky and W. Xu, Proc. IEEE Automatic Speech Recognition and Understanding Workshop, P. I-337, 1999). In contrast, the nodes of the knowledge tree generated by the improved dialogue manager 20 are complete blocks of information (i.e. dialogue frames).

### OPERATION OF THE IMPROVED DIALOGUE MANAGER

The description of the improved dialogue manager has so far focussed on the structural components of the dialogue manager and has in particular distinguished between the generic and specialised functional agents and data storage components.

The following discussion will describe how the different structural elements of the improved dialogue manager operate to detect and facilitate or defer user-led changes in dialogue topics. In particular, referring to Figures 2a and 2b, the discussion will consider the following topics:
(1) the identification of the agent most suited with dealing with a particular dialogue topic at the start of, and during a dialogue session;
(2) the implementation of the generic confirmation strategy by the *Discoursernanager* and its inheritance by domain-specific Experts;
(3) the creation new informational elements in response to confirmed data provided by the user;
(4) the transfer of dialogue control from a service agent to a support agent;
(5) the detection and transition rules for the implementation of user-initiated transfers of dialogue control;
(6) the operation of a failsafe mechanism for identifying a handling agent; and
(7) the implementation of the expert rules encapsulated within the domain-specific Experts.

### 1. Identification of an Appropriate Handling Agent

### 1(a) At the Start of a Dialogue Session

The first step in starting a dialogue session is to identify the most appropriate agent to process a user's enquiry. The agent-identification process is typically performed automatically by a *DomainSpotter* 60. However, in the event that a number of agents are suitable for processing the user's enquiry, the improved dialogue manager 20 provides the user with the option of selecting the agent they consider to be most appropriate for their circumstances. Both of these options are discussed in greater detail below.

### (i) Automatic Process for Appointing an Initial Handling Agent

Referring to Figures 2a and 2b, the improved dialogue manager 20 uses a *DomainSpotter* 60 to identify an appropriate handling agent for a user's query. In an initial attempt to identify a handling agent the *DomainSpotter* 60 focuses its attention on service agents 30 only and supplies each service agent 30 with the output of the semantic parse received from the natural language parser.

Each service agent 30 is provided with a range of integer values for scoring the degree of relevance it assigns to different domain-specific parse tags. Accordingly, each service agent 30 scores the parse of the initial user utterance against the semantic categories that it can process and returns the score to the *DomainSpotter 60.*

The service agent 30 that attains the highest score is deemed to be the most appropriate handling agent for the user's enquiry by the *DomainSpotter 60.* Accordingly, this service agent 30 is selected to apply its domain-specific heuristics to the more detailed processing of the user's enquiry. For example, the *AccommodationExpert* 31 might score highest and so become the handling agent if the user had been asking about hotels in Belfast.

In addition, specialised agents also attain a higher score for specialised parser tags than generic agents. For example, a user request such as "I'd like to go to see THE LION KING 2." might parse as event_enquiry:[Event_type].[Movies].THE LION KING 2. In this case, although the *EventExpert* 32 could award a score for the *event_enquiry*, the *CinemaExpert* 34, as a child of *EventExpert* 32, would award a score not only for the *event_enquiry*, but for *Movies* as well, and so would be the winner.

### (ii) User-Selection of Appropriate Expert

If the *DomainSpotter* 60 is unable to identify a winning agent because more than one agent can deal with the user's query the *DomainSpotter* 60 will ask the user to choose between the agents in closest contention. Indeed, if the user's enquiry is so vague as to provide no domain-related information ("I'd like to make an enquiry."), the *DomainSpotter* 60 will request the user to choose between one of its top-level service agents.

### 1(b) During a Dialogue Session

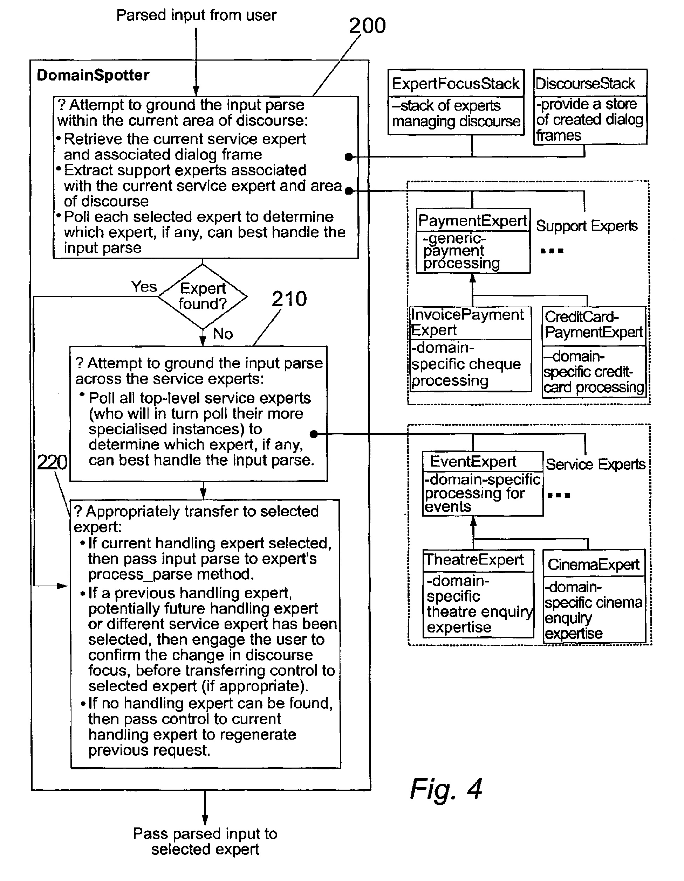

Having identified an appropriate handling agent for initiating a dialogue, Figure 4 shows the strategy employed by the improved dialogue manager for determining which agent should handle the user's further utterances. In a first filtering step 200, the improved dialogue manager attempts to restrict the most recent user utterance to the current area of discourse. In a second filtering step 210, the Dialogue Manager attempts to restrict the user's utterance to a service enquiry (rather than a support activity). In the final filtering step 220 the Dialogue Manager identifies the appropriate Expert for the user's last utterance.

The implementation of the transition rules by which the improved dialogue manager controls user-led shifts of dialogue topics will be discussed below.

### 2. Implementation of Generic Confirmation Strategy by DiscourseManager and inheritance by Experts

It has already been shown that the *DiscourseManager* 22 implements a generic confirmation strategy for determining the improved dialogue manager's 20 response to new, modified or negated information from a user.

The *DiscourseManager* 22 implements the generic confirmation strategy and creates new dialogue frames for each utterance of the user by determining whether the utterance represents the repetition, modification or negation of information previously provided by the user. The *DiscourseManager* 22 performs this determination by comparing the dialogue frame corresponding to the user's latest utterance, with a corresponding dialogue frame representing the last discourse state taken from the *DiscourseStack* 123.

Since the dialogue frame taken from the *DiscourseStack* 123 details the information previously provided by the user together with the status of the information (repeated, modified, negated, etc.) and the system's previous intentions for confirming or repairing supplied or missing information, the generic confirmation strategy enables the improved dialogue manager 20 to interpret the user's most recent utterance in light of the improved dialogue manager's own last utterance. For instance, if the user answers "Yes" in response to the system's observation "So, you're staying in Dublin", then Dublin can be regarded as the confirmed location.

As will be recalled, the domain-specific 'Experts' all inherit the generic dialogue handling strategies of the *DiscourseManager* 22. In particular, in order for each Expert to update the record of the evolving dialogue, each Expert takes on the improved dialogue manager's 120 *DiscourseHistory* 122 as an inheritable attribute of its own and the evolving domain-specific and generally Expert-specific frames of attributes are maintained on the *DiscourseStack* 123 within the *DiscourseHistory* object 122.

Once it is handling a particular discourse segment, an Expert uses its inherited confirmation strategy to compare the most recent values in its current dialogue frame with the corresponding values and system intentions in the previous iteration of that frame. Thus the Expert is able to determine which values have been confirmed (e.g. the user has not challenged an implicit confirmation request by the system) and which have been modified or negated.

### 3. Creation of New Informational Elements

During the generic confirmation strategy, the *DiscourseManager* 22, creates new dialogue frames based on a comparison of the semantic contents of the latest user utterance, with the contents of the last matching dialogue frame taken from the *DiscourseStack* 123.

Take for example, an Attribute object 125 with the attributeName "AccommodationName" and the *systemlntention* att-att set to CONFIRM in the last dialogue frame. If the user repeats the previously stored *attributeValue* (e.g. "Hilton Belfast") the improved dialogue manager's 20 rules for evolving a new dialogue frame establishes the att-atts of the corresponding Attribute object 125 of the new dialogue frame as follows:
(a) *discoursePeg* is incremented;
(b) *confirmationStatus* is set to REPEATED_BY_USER; and
(c) *systemlntention* is reset to UNDEFINED (i.e. 'no further intention to confirm at this stage').

The process of creating new dialogue frames with each operation of the generic confirmation strategy ensures that the frames of information in the *DiscourseStack* 123 are typically populated in the course of several discourse turns, as new or additional information is acquired from successive user-system interactions.

As will also be recalled the tree-like structure in which information is stored in the improved dialogue manager 20 arises from the fact that a dialogue frame may include as part of its attributes links to frames of other types. For example, the *createAttribute()* method in the *TheatreDialogFrame* 133 constructor includes the following definition and initialisation:

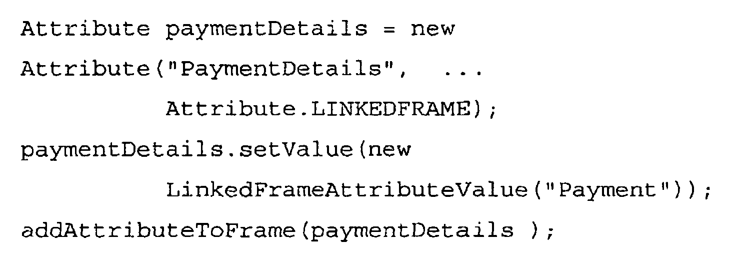

In the above example, the "placeholder string" paymentDetails indicates that the dialogue frame of theatre booking information should include as an attribute a dialogue frame of payment details.

### 4. Transferring Control Between Service and Support Agents

In order to keep track of the progress of a conversation and the agents employed thus far, the improved dialogue manager 20 uses an *ExpertFocusStack* 70 in the *DomainSpotter* 60. Once an agent has been selected to handle the current discourse segment, it is pushed on to the top of the *ExpertFocusStack* 70. The agent then uses its expert rules to elicit all the information needed to complete its discourse segment. Depending on the rules it encapsulates, a *service* agent 30 may require the help of a *support* agent 50. For example, if an *AccommodationExpert* 31 has elicited sufficient information to proceed with a reservation, it will require the help from an agent whose expertise resides in the area of *payment.* The agent will transmit this requirement to the *DomainSpotter* 60 who will identify an appropriate service agent (i.e. *PaymentExpert* 52 in the present example).

The selected support agent is then placed above the service agent on the *ExpertFocusStack* 70 (i.e. in the present example, *PaymentExpert* 52 is placed above *AccommodationExpert* 31 on the *ExpertFocusStack* 70).

Using the above accommodation payment example, should the process of eliciting payment details first involve eliciting address details, the *PaymentExpert* 52 will request the *DomainSpotter* 60 to find it an agent specialising in address processing (i.e. *AddressExpert* 51 in the present example). The *AddressExpert* 51 now goes to the top of the *ExpertFocusStack* 70, above the *PaymentExpert* 52.

Similar to any other agent, the *AddressExpert* 51 has rules that allow it to accept typical combinations of information supplied (prompted or unprompted) by the user and to ask appropriate follow-up questions for whatever information is still missing. Once a support agent 50 has all the information it needs, one of its rules will fire to pass control back (along with a 'finished' message) to whatever agent was below it on the *ExpertFocusStack* 70 (i.e. in the present example, the *AddressExpert* 51 will pass control back to the *PaymentExpert* 52). If the user does not introduce a new topic, the rules of this agent (i.e. *PaymentExpert* 52), will continue to fire until all necessary payment information has been elicited and the payment sub-dialogue can be concluded. At this point, control is passed back to the *AccommodationExpert* 31.

### 5. Detection and Implementation of User-Initiated Shifts of Dialogue Focus

As previously discussed, a mixed initiative dialogue management strategy must be capable of coping with user-initiated shifts of discourse focus. Bearing in mind that a dialogue manager may be dealing with a number of different discourse topics, a number of rules have been developed for controlling transfers of dialogue control and thereby providing a degree of contextual coherency to a dialogue session. In particular, user-initiated transfers of dialogue control are restricted to ensure that the improved dialogue manager elicits information in a clearly defined context.

Before transferring (or refusing a transfer) to a new handling agent, the improved dialogue manager always confirms the user's intentions ("Do you want to enquire about cinema bookings?"). Bearing in mind that the improved dialogue manager can operate in a number of different though potentially related transaction domains, the above confirmation strategy reduces the risk of serious misinterpretations of users' free-form utterances.

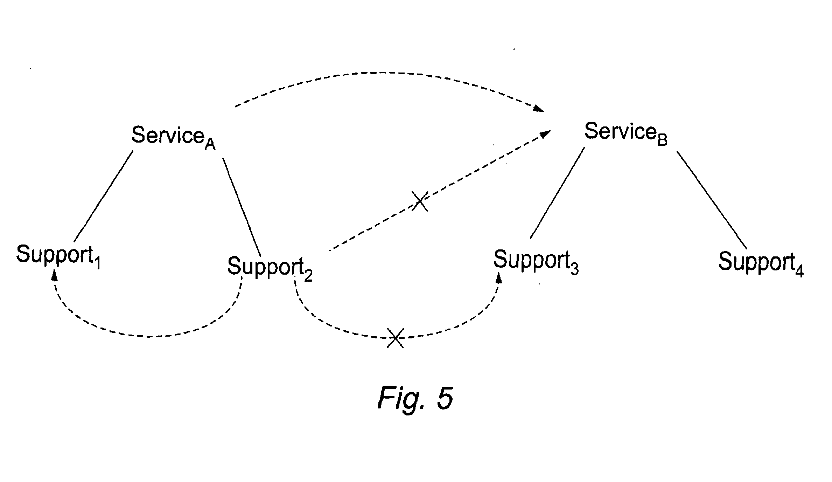

The following discussion describes the rules for user-initiated transfers of dialogue control (henceforth known as transition rules) in more detail and is based on an example dialogue session whose agent tree is shown in Figure 5. The agent tree is comprised of two service agents Service_{A} and Service_{B}. The Service_{A} service agent is provided with two support agents, namely Support₁ and Support₂ and the service agent Service_{B} is similarly provided with two support agents, namely Support₃ and Support₄.

Nonetheless, it will be recognised that the transition rules described below are specific to the present example and may be modified to suit the requirements of different applications.

### (a) Permitted Transfers of Dialogue Control

The improved dialogue manager permits transfer of dialogue control between service-related dialogue topics. In other words, referring to Figure 5, the improved dialogue manager permits the user to change topic from the topic dealt with by service agent Service_{A} to the topic dealt with by service agent Service_{B} (i.e. Service_{A} -> Service_{B} transition permitted). This transition rule is designed to facilitate the situation in which a user wishes to carry out parallel enquiries. For example, the above transition rule permits the user to discuss an event booking in parallel with making accommodation enquiries.

The improved dialogue manager is able to continue a dialogue in a particular domain even if that dialogue has been interrupted by a dialogue in another domain. For example, referring to Figure 2b, *AccoDialogFrame* 131 is the specialised dialogue frame for handling accommodation enquiries. *AccoDialogFrame* 131 has a constructor that tags a dialogue frame with the identifier "Accommodation" (using the generic *DialogFrame* 124 *setIdentifier()* method), and uses the generic *DialogFrame* 124 *addAttribute()* method to initialise the dialogue frame with a number of attributes (e.g. accommodation type, date from, date to).

By tagging all instances of *AccoDialogFrame* 131 with the identifier "Accommodation", the DiscourseHistory 122 *getLastMatchingFrame()* method may be used to retrieve a dialogue frame that furthers a particular discourse strand (e.g. an accommodation enquiry), even though the user may have made other intervening utterances (e.g. about hiring a car) that cause dialogue frames pertinent to a different type of enquiry, albeit a related one, to be 'interleaved' among the *AccoDialogFrames* 131 in the *DiscourseStack* 123.

### (b) Restricted Transfers of Dialogue Control

The improved dialogue manager uses specific transition rules to restrict the following user-initiated shifts of dialogue focus:
(i) ongoing support dialogue topic to new service dialogue topic; and
(ii) ongoing support dialogue topic to new support dialogue topic.

However, the improved dialogue manager does acknowledge the requested transition and initiates a dialogue of the requested type at the earliest opportunity.

### (i) Transition Rules for Shifts in Dialogue Focus from Support to Service-Related Topics

The specific transition rules implemented by the improved dialogue manager may vary from one application to the next. Nonetheless, in order to maintain intuitive relationships between topics and sub-topics, the principles for implementing the transition rules remain fairly constant.

Dialogue frames are key to the implementation of transfers of dialogue control between service agents and support agents. As will be recalled, the Attribute objects of a dialogue frame (e.g. an *AccoDialogFrame* 131) may include links to other types of dialogue frames (e.g. *PaymentDialogFrame* 152). Consequently, dialogue frames can be used to identify the support dialogues associated with each service dialogue. In particular, dialogue frames associated with service dialogues (i.e. service dialogue frames) can be expanded into a tree-like structure by recursively traversing the various support dialogue frames linked to the service dialogue frames.

Referring to Figures 2a and 2b, take for example, the case in which a user has provided a telephone number when the *AccommodationExpert* 31 is still asking about the type of accommodation required. In this case, the user has shifted the conversation outside of the domain of the *AccommodationExpert* 31. Nonetheless the telephone number provided by the user may still be relevant to the broader accommodation transaction, since it may be needed to complete the user's personal details when booking the accommodation.

The *DomainSpotter* 60 uses the tree of dialogue frames associated with the current service dialogue frame (i.e. *AccoDialogFrame* 131) to determine which support agents have been or may be involved in the current service enquiry. These support agents are then used as handlers for the user's last utterance. In the present example, if the *TelephoneExpert* 55 has previously been involved in the dialogue session it is used to deal with the user's utterance regarding his/her telephone number.

The above process of traversing the support dialogue frames linked to a service dialogue frame is comparatively straightforward for dialogue frames that have already been in the discourse focus (i.e. dialogue tasks that have already been the subject of user-system interaction). However, the *DomainSpotter* 60 also predicts which Experts are likely to be required as future handling agents in a particular dialogue session. Accordingly, the *DomainSpotter* 60 includes the dialogue frames associated with the predicted handling agents into the agent tree for the dialogue session.

For example, at the outset of an accommodation enquiry, the service dialogue frame for the enquiry (i.e. *AccoDialogFrame* 131) will not generally contain an explicit link to a payment dialogue frame (i.e. *PaymentDialogFrame* 152). However, since the *DomainSpotter* 60 can determine which agents provide payment support, the improved dialogue manager 20 can generate a number of potential discourse paths relating to payment. Keywords in the user's utterance determine which path is in fact used and which payment-related dialogue frames are explicitly linked to the accommodation dialogue frame.

From the above it can be seen that whilst the improved dialogue manager transition rules permit transfers of dialogue control between semantically linked dialogue topics and their corresponding service and support agents (e.g. Service_{A} <-> Support₁ in Figure 5), the transition rules do not permit immediate transfers of dialogue control between an ongoing dialogue with a support agent and an unconnected dialogue with another service agent (e.g. Support₂ -> Service_{B} in Figure 5 is not permitted). Furthermore, the improved dialogue manager will always confirm that it has understood a transfer request correctly before it permits or defers the transfer.

### (ii) Transition Rules for Shifts in Dialogue Focus Between Different Support Related Topics

The transition rules regarding shifts of dialogue focus between support-related dialogue/sub-dialogue topics, differentiates between semantically linked and unconnected support-related topics. In particular, the improved dialogue manager permits transfers of dialogue focus between connected support-related dialogue topics (and corresponding support agents) under limited circumstances, but does not permit immediate transfers of dialogue focus between unconnected support-related dialogue topics (and corresponding support agents).

### Transfer of Dialogue Control Between Connected Support-Related Dialogue Topics: Permitted Transfers

Referring to Figure 5 it will be noted that the dialogue topic associated with support agent Support₁ is connected to the dialogue topic associated with support agent Support₂ through the dialogue topic associated with service agent Service_{A}. The improved dialogue manager will only permit an immediate transfer of dialogue control between the dialogue topics associated with support agents Support₂ and Support₁ if the topic associated with Support₁ has previously been discussed in the dialogue session.

More generally, if the user's last utterance is scored most highly by a support agent 50 that is relevant to the current service and whose topic has already been in the discourse focus, the user can return to this topic. In this case, the transfer in dialogue control may indicate the user's intention to add to or modify information that was previously supplied. As a safeguard, the system will reorder the *ExpertFocusStack* 70 in these circumstances, so that any support agents 50 whose rules fired on the previous path to the revisited agent will be allowed to test their rules again (new address information, for instance, may affect a credit card option, for instance, if the revised address is in UK, the *CreditCardExpert* 54 may mention UK cardholder offers etc.)

### Transfer of Dialogue Control Involving Support-Related Dialogue Topics: Deferred Transfers

If the user wishes to transfer to a new support sub-dialogue before completing an existing support sub-dialogue, the request will be deferred.

Take for example a conventional human-human conversation in which a client wishes to book accommodation and is providing credit card details to a booking clerk. In this instance, even though the client may also wish to provide a telephone number, it is generally preferable for the booking clerk to maintain the conversational focus on the acquisition of the relevant credit card details before dealing with the telephone number.

In a similar fashion the improved dialogue manager holds the dialogue focus on a support dialogue (e.g. gathering payment details for an accommodation booking), rather than interrupt the support dialogue to start a new service enquiry (e.g. about cinema bookings).

When deferring a request for a new service/support enquiry the *DomainSpotter* 60 places the relevant handling agent on the bottom of the *ExpertFocusStack* 70, so that it will come into the discourse focus later and notifies the user of the deferral ("Thanks, I'll take the telephone details in a moment...").

The improved dialogue manager does not ignore the contents of the utterance that led to the deferral. The *DiscourseHistory* 122 object contains an *UtteranceStore* 121, comprising a stack of the parses of the user's utterances. When the *DiscourseHistory* 122 object takes control of the dialogue (e.g. because one of the handling agent's rules has requested its services), the handling agent first looks to the *UtteranceStore* 121 to see if there is any unprocessed information that it can handle.

If there is any unprocessed information in the *UtteranceStore* 121 that the handling agent can handle, the handling agent takes the unprocessed parsed information and begins processing the information as usual with its inherited generic confirmation strategy and its domain-specific expert rules (e.g. "You mentioned a telephone number. Let me just confirm the details: area code...").

### Transfer of Dialogue Control Between Unconnected Support-Related Dialogue Topics

The transition rules for the present example do not permit user-initiated transfers of dialogue control between unconnected dialogues and sub-dialogues and their associated support agents (e.g. Support₂ and Support₃ in Figure 5).

### 6. Failsafe Mechanism for Identifying a Handling Agent

If the *DomainSpotter* 60 fails to locate a potential handling agent for an "out-of-domain" utterance in the context of the current service transaction, it polls the other service agents 30 (i.e. does the user want to change from an accommodation enquiry to an enquiry about cinema bookings?).

### 7. Implementation of Expert Rules

Referring to Figures 2a and 2b, rule specifications are used as parameters for building *ExpertRule* objects 80, which contain methods for extracting and analysing the contents of the rule. These rule objects are in turn built into *ExpertRuleSequence* objects 82.

Each instance of an *EnquiryExpert* object 84 (e.g. *AccommodationExpert* 31) may use the generic confirmation strategy to test its rule sequences when there are no user-initiated negations to be addressed. Under this testing strategy, more specialised expert rule sequences are tested before any more general, inherited, expert rule sequences.

As has been previously discussed in the description of the structural aspects of the domain-specific Experts, a user-focussed Expert rule may cause a SPECIFY intention to be set against an attribute in a dialogue frame, or it may initiate a database search. Furthermore, database-focussed Expert rules may cause a database query to be resubmitted in amended form, if the database search fails to return the value(s) sought, the query.

### OPERATION OF COMPLETE SPOKEN DIALOGUE SYSTEM

As discussed earlier a dialogue manager is merely one component in an end-to-end automatic dialogue system. Referring to Figure 1, the improved dialogue manager is designed to interface with the *Galaxy* hub 14 of a DARPA communicator system. Since the *Galaxy* hub 14 supports inter alia Java, the improved dialogue manager can communicate through the *Galaxy* hub 14 with third party modules to provide a complete end-to-end automatic dialogue system that hears and understands the user, interacts with a "back-end" database 8 and utters an appropriate response. It will of course be realised that the *Galaxy* hub 14 also supports other languages such as C++. Consequently, the improved dialogue manager is not limited to a Java implementation.

The improved dialogue manager accepts as input semantically tagged key-words and phrases from the Phoenix natural language parser (W. Ward, *Proceedings of ICSLP 94,* pp. 83-86, Yokohama, 1994). The improved dialogue manager is interfaced to the *Galaxy* hub 14 through a Java *DialogServer* class which includes the relevant hub package (importgalaxy.server.*;) and creates and populates frames of information in the *Galaxy* format. The hubscript associates "keys" in the frame with specific service providers (e.g. a natural language server) and routes the frame accordingly.

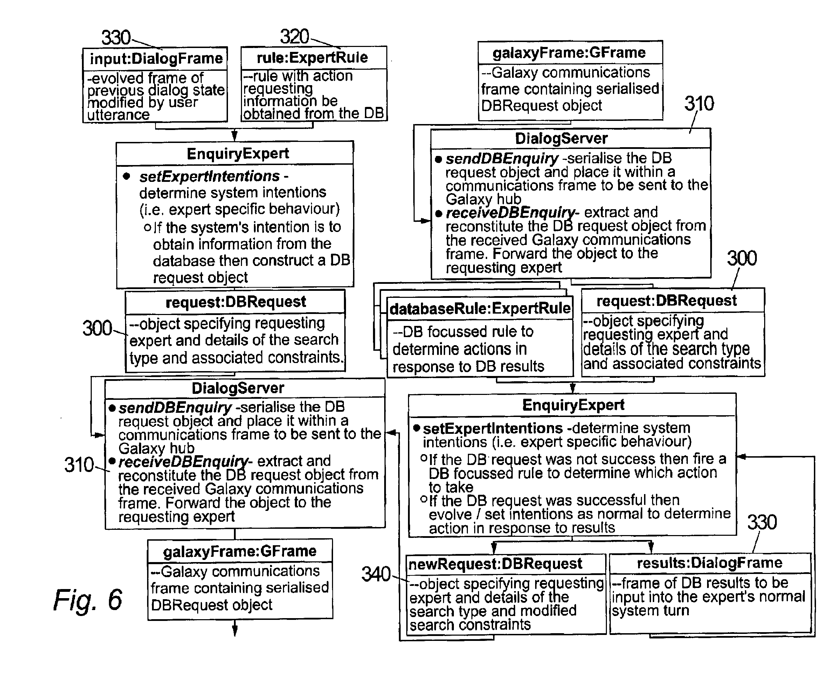

Figure 6 depicts the process by which a domain-specific Expert from the improved dialogue manager makes a request for information from the "back-end" database 8 connected to the *Galaxy* hub. If a service or support agent needs to make a search of the database connected to the *Galaxy* hub, it creates a *DBRequest* object 300 whose attributes record which values are sought.

In processing the database request, the *DBRequest* object 300 must pass between two servers, namely the *DialogServer* 310 and the DatabaseServer. The *DBRequest* class 300 therefore includes encoding and decoding functionality that allows its instances to be encapsulated at the *DialogServer* 310 as a bitstream within a *Galaxy* hubframe (*sendDBEnquiry*) and reconstituted at a receiving DatabaseServer as an object. The contents of the DBRequest object 310 are then used to formulate an SQL database query and the *DBRequest* object 310 is populated with the results of the database search.

The *DBRequest* object 310 is encoded again and sent back to the improved dialogue manager via the *Galaxy* hub. Once received by the improved dialogue manager the *DBRequest* object 310 is reconstituted (*receiveDBEnquiry*) and passed back to the domain expert that initiated the search. The domain expert can then apply its Expert rules 320 to the data in the DBRequest object 310 (results:DialogFrame 330).

If the information retrieved from the database indicates that a user's request cannot be satisfied, the Expert's database-focussed rules may cause a further *DBRequest* object 310 to be generated (newRequest:DBRequest 340). This process is used to reformulate the failed query and provide the user with alternative values from which to choose (e.g. there may be no vacancies on the date on which the user wished to stay at a particular hotel, so the system relaxes the hotel constraint and queries the database for an alternative hotel).

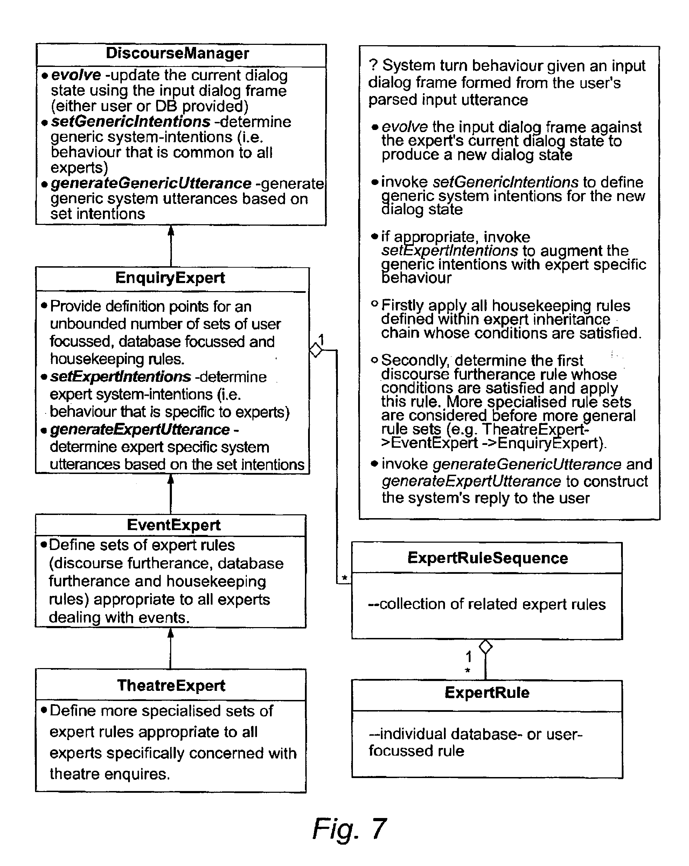

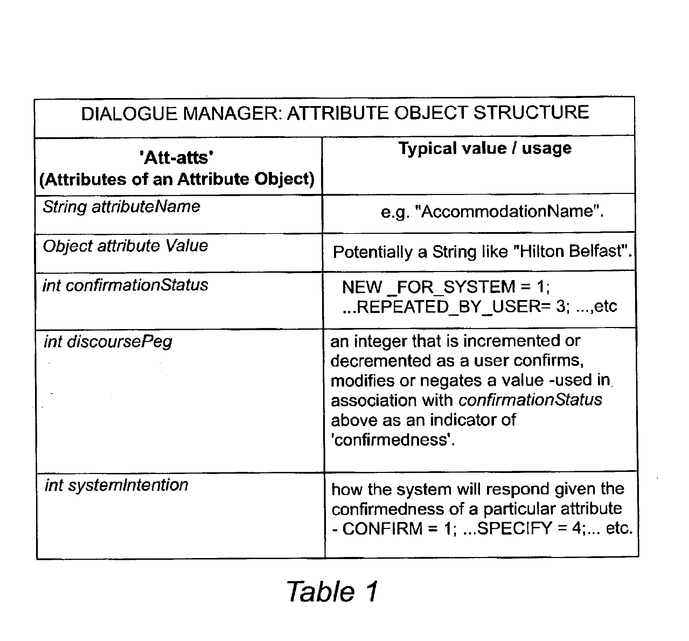

Figure 7 shows the manner in which the improved dialogue manager, evolves a discourse by combining its generic and domain-specific intentions. In a first step a handling agent checks what generic confirmation issues should be addressed (for example, are there new or changed user-supplied values to be confirmed?). The handling agent then checks if it can fire any of its domain-specific Expert rules. The handling agent fires its housekeeping rules first and then fires its user-focussed and database-focussed rules. The user-focussed and database-focussed rules constitute 'dialogue furtherance rules', insofar as they indicate to the user the information that the improved dialogue manager requires to further a transaction. Database-focussed rules typically suggest values from which the user may wish to choose (names of hotels with vacancies, for example) in the event that the user-defined constraints cannot be satisfied.

It will of course be recognised that the implementation of the improved dialogue manager is purely for example only. Consequently, the improved dialogue manager is not limited to the above-described natural language semantic parser and speech synthesiser and could in fact be used with any suitable semantic parser and speech synthesiser or other third party modules.
Whilst the improved dialogue manager has been described as part of a system that operates on received verbal commands and queries from a user, it will be appreciated that the improved dialogue manager could also be operated with systems that accept other forms of user communication (e.g. gestural or emotional communication modes). Similarly, whilst the transition rules regarding allowed transfers of dialogue control have been described as static pre-defined entities, the improved dialogue manager could also operate with adaptive transition rules.

Modifications and alterations may be made to the above without departing from the scope of the invention.

### EXAMPLE SCENARIO

In this example, a user wishes to book a four star hotel in Belfast from 15-20 December. When the automatic dialogue system returns a list of four start hotels, the user changes the request to a three star hotel. The automatic dialogue system returns a list of three star hotels and the user selects one and asks to book a double room. The user then asks for a single room rather than a double.

As the automatic dialogue system elicits payment details the user asks about movies. The improved dialogue manager defers the movie enquiry, concludes the accommodation booking and then takes up the user's cinema enquiry, remembering the cinema-related information that was supplied earlier.

An annotated transcript of the dialogue between the user and the automatic dialogue system corresponding to the above scenario is provided below. Notes are included at key points in the transcript to identify which main features of the Java DM are in use. The software code underlying various stages in the process is shown in italic form.

### Initial Query

- **System:**: Welcome to the Communicator. How can I help you?
- **User:**: I'd like to book a four-star hotel in Belfast from the fifteenth of December to the twentieth of December.

### Notes:

Referring to Figures 2a and 2b, key words from the user's utterance like four-star and hotel fall within the accommodation domain, and are provided with a high score by the *AccommodationExpert* 31. Accordingly the *DomainSpotter* 60 appoints the *AccommodationExpert* 31 as the 'handling agent' for the current user enquiry. The *AccommodationExpert* 31 populates its *AccoDialogFrame* 131 with whatever relevant information has been supplied by the user.

### Implicit Confirmation and Processing of Query

- **System:**: So that's an accommodation booking for a four-star hotel in Belfast from the fifteenth of December two thousand and three to the twentieth of December two thousand and three. Please wait while I check the database...

### Software Code:

- *MESSAGE:*: *process accommodation* booking
- *MESSAGE:*: *GIVEN*
*AccoType [HOTEL]*
*AccoClass [four-star]*
*Location [BELFAST]*
*DateFrom [2003-12-15]*
*DateTo [2003-12-20]*
- *MESSAGE:*: *database enquiry initiated*

### Notes:

The *AccommodationExpert* 31 uses the generic confirmation strategies it has inherited from the *DiscourseManager* 22 to implicitly confirm the new values that it has identified. The *AccommodationExpert* 31 then uses its own domain-specific rules to initiate a database lookup to retrieve the names of hotels that match the user's criteria.

### Further Processing of Query

- **System:**: You can choose between the following hotels: the Europa, the Malone Lodge, the Stormont or the Holiday Inn
- *PROMPT:*: *SPECIFY AccoName [europa] [malone-lodge] [stormont] [holiday-inn]*

### Altered User Query

- **User:**: Could you make that a three-star?

### Implicit Confirmation of Altered Query

- **System:**: OK, got you. That's three-star accommodation. Is that OK?
- *MESSAGE:*: *user changed value AccoClass [three-star]*
- *QUERY:*: *confirm changes*

### Notes:

Using its inherited confirmation strategy, the *AccommodationExpert* 31 compares the value for the star-rating in the previous dialogue frame with the star-rating in the current dialogue frame and performs a 'repair-confirm' on the changed value.

### Further Processing of Confirmed Query

- **User:**: Yes, that's right.
- **System:**: Please wait while I check the database
- *MESSAGE:*: *database enquiry initiated*
- **System:**: You can choose between the following hotels: Jurys and The Lisdara
- *PROMPT:*: *SPECIFY AccoName [jurys] [lisdara]*
- **User:**: I'll go for a double room at Jury's

### Explicit Confirmation

- **System:**: So, let me just check that. You want a double room at the three-star Jury's hotel in Belfast, from the fifteenth of December two thousand and three to the twentieth of December two thousand and three. Are those details correct?
- *MESSAGE:*: *explicit confirm values*
*AccoName [jurys]*
*AccoType [HOTEL]*
*AccoClass [three-star]*
*Loca ti on [BELFAST]*
*AccoRoomType [double]*
*DateFrom [2003-12-15]*
*DateTo [2003-12-20]*
- *QUERY:*: *CONFIRM values*

### Notes:

The handling agent explicitly confirms all key values (i.e. those needed to conclude a major segment of the discourse).

### Further Query Change by User

- **User:**: Make that a single room.

### Notes:

Rather than perform a 'repair-confirm' on the individual changed value and re-confirm it in the general confirmation of the key values, generic EnquiryExpert behaviour determines that the handling agent should perform only the general confirmation

### Explicit Confirmation

- **System:**: So, let me just check that. You want a single room at the three-star Jury's hotel in Belfast, from the fifteenth of December two thousand and three to the twentieth of December two thousand and three. Are those details correct?
- *MESSAGE:*: *explicit confirm values*
*AccoName [jurys]*
*AccoType [HOTEL]*
*AccoClass [three-star]*
*Location [BELFAST]*
*AccoRoomType [single]*
*DateFrom [2003-12-15]*
*DateTo [2003-12-20]*
- *QUERY:*: *CONFIRM values*

### Further Processing of Query

- **User:**: Yes.
- **System:**: Would you like me to check availability?
- *PROMPT:*: *SPECIFY CheckAvailability*
- **User:**: Yes.
- **System:**: OK, I'll see if that's available.
- *MESSAGE:*: *GIVEN CheckAvailability [true]*

- **System:**: Yes that's available. Would you like me to reserve that for you?
- *MESSAGE:*: *Availability OK*
- *PROMPT:*: *SPECIFY Reservation*
- **User:**: Yes, please.
- **System:**: OK, I'll see if I can reserve that.
- *MESSAGE:*: *GIVEN Reservation [true]*
- **System:**: Yes, that's reserved. Let's go on now with payment details. Let's start with the address. Can you tell me your house number please?
- *MESSAGE:*: *Reservation OK*
- *MESSAGE:*: *process payment details*
- *MESSAGE:*: *process address details*
- *PROMPT:*: *SPECIFY HouseNumber*

### Notes:

The *AccommodationExpert* 31, having elicited the hotel details, now calls, via the *DomainSpotter* 60, on the services of a *PaymentExpert* 52, which in turn calls on the services of an *AddressExpert* 51.
- **User:**: It's 3 Malone Road, Belfast BT7 1NN.

### Notes:

Although the automatic dialogue system asked only for the user's house number, the user provided their full address. In the frame-based, phrase-spotting approach used in the improved dialogue manager any relevant information is used by the handling agent (i.e. the *AddressExpert* 51) to populate slots in the current dialogue frame. The unrequested information is thus accepted.

### Explicit Confirmation

- **System:**: So, let me just check that. That's number three Malone Road; city: Belfast; postcode BT7 1NN. Are those details correct?
- *MESSAGE:*: *explicit confirm values*
*HouseNumber [3]*
*StreetName [MALONE ROAD]*
*CityName [BELFAST]*
*PostCode [BT7 1NN]*
- *QUERY:*: *CONFIRM values*

### Further Information Gathering

- **User:**: Yes.
- **System:**: OK, I've got all your address details.
Let's go on now with payment details. How would you like to pay?
- *MESSAGE:*: *address details complete*
- *MESSAGE:*: *process payment details*
- *PROMPT:*: *SPECIFY PaymentType*

### Topic Shift by User

- **User:**: Could I just check what's on at the UGC Cinema?

### Notes:

The user has ignored the request from the handling agent (i.e. *PaymentExpert* 52) for details of the type of payment (e.g. credit card or invoice). Instead, the user has asked about an entirely different transactional domain, namely cinema bookings.

On the basis of key words in the user's utterance ('UGC', 'Cinema'), the *DomainSpotter* 60 recognises that the user is attempting to change topic from a support agent 50 to a new service agent 30, and at this stage defers the user's request. However, the *DomainSpotter* 60 places the *CinemaExpert* 34 at the bottom of the *ExpertFocusStack* 70 for use later. When the *CinemaExpert* 34 does eventually become the handling agent, it will be able to make use of the information that the user has already supplied (because this information has been stored in the *UtteranceStore* 121).

### Deferring the User-Initiated Topic Shift

- **System:**: Do you want to enquire about cinema bookings?
- *PROMPT:*: *SPECIFY UserUnderstood QUERY change domain [cinema booking]*
- **User:**: Yes.
- **System:**: Got it. I'll just complete the payment details first. We'll look at cinema bookings in a moment. Let's go on now with payment details. How would you like to pay?
- *MESSAGE:*: *GIVEN UserUnderstood [true]*
- *MESSAGE:*: *transfer not possible from [payment details] defer transfer to [cinema booking]*
- *MESSAGE:*: *process payment details*
- *PROMPT:*: *SPECIFY PaymentType*
...

### Notes:

Once the payment details for the accommodation have been elicited and confirmed, and the accommodation booked, the automatic dialogue system is ready to move on from the *AccommodationExpert* 31 to the next agent on the *ExpertFocusStack* 70, (i.e. the *CinemaExpert* 34) which, like all agents, first of all checks the *UtteranceStore* 121 for any relevant, previously parsed input.

### Returning to New User Topic

- **System:**: So that's the accommodation booking complete. Let's go on now with the cinema booking. You mentioned the UGC cinema. What date would you like to go?
- *MESSAGE:*: *accommodation booking complete*
- *MESSAGE:*: *process cinema booking*
- *MESSAGE:*: *recall previous utterances*
- *MESSAGE:*: *GIVEN EventVenue [ ugc ]*
- *PROMPT:*: *SPECIFY Date*
- **User:**: The seventeenth of December.
- **System:**: So that's the seventeenth of December two thousand and three. Please wait while I check the database.
- *MESSAGE:*: *GIVEN Date [2003-12-17]*
- *MESSAGE:*: *database enquiry initiated*
- **System:**: Which of the following movies would you like to see: Brother Bear, Love Actually, Elf, SWAT, The Fighting Temptations, The Mother, Thirteen, Timeline, Lord of the Rings 3.
- *MESSAGE:*: *GIVEN Date [2003-12-17]*
- *PROMPT:*: *SPECIFY EventName [Brother Bear] [Love Actually] [Elf] [SWAT] [The Fighting Temptations] [The Mother] [Thirteen] [Timeline] [Lord of the Rings 3]*

## Claims

1. A system for conducting a dialogue with a user comprising:
an assignment unit, a plurality of processing units each of which comprise one or more processing rules, and a plurality of data storage units;
wherein the assignment unit receives a communication from a user, assigns the communication to a processing unit according to the communication's semantic content and stores information relating to the communication in a data storage unit; and
the assigned processing unit processes the communication in accordance with the processing unit's processing rules and provides a response to the user.

2. A system for conducting a dialogue with a user as claimed in Claim 1 wherein the processing units further comprise at least one domain-independent confirmation rule for confirming the user's communication.

3. A system for conducting a dialogue with a user as claimed in any of the above Claims wherein individual processing units are adapted to perform tasks of different specificities.

4. A system for conducting a dialogue with a user as claimed in Claim 3 wherein the processing rules of each processing unit reflect the specificities of the tasks they perform.

5. A system for conducting a dialogue with a user as claimed in Claim 4 wherein processing units are hierarchically organised according to the specificity of their processing rules.

6. A system for conducting a dialogue with a user as claimed in Claim 4 or Claim 5 wherein processing units with more specialised processing rules are substantially independent of those with less specialised processing rules.

7. A system for conducting a dialogue with a user as claimed in any of the preceding Claims wherein the processing rules of each processing unit comprise one or more rules for triggering specific responses to particular combinations of information supplied by the user.

8. A system for conducting a dialogue with a user as claimed in Claim 7 wherein the processing rules of the processing units comprise one or more rules for modifying one or more constraints supplied by the user for performing a search of data repositories.

9. A system for conducting a dialogue with a user as claimed in any of Claims 3 to 6 wherein the data storage units are adapted to store information of corresponding specificity to the tasks performed by the processing units.

10. A system for conducting a dialogue with a user as claimed in Claim 9 wherein the data storage units are hierarchically organised according to the specificity of the information they are adapted to store.

11. A system for conducting a dialogue with a user as claimed in any of the preceding Claims wherein the data processing units store information derived from each communication from the user and each communication by the system to the user.

12. A system for conducting a dialogue with a user as claimed in any of Claims 9 to 11 wherein information derived from each user communication is stored in a data storage unit in accordance with the specificity of the tasks performed by the processing unit to which the user communication was assigned.

13. A system for conducting a dialogue with a user as claimed in any of Claims 9 to 11 wherein information derived from each communication by the system to the user is stored in a data storage unit in accordance with the specificity of the task performed by the processing unit which generated the communication.

14. A system for conducting a dialogue with a user as claimed in any of Claims 9 to 13 wherein the identity of each data storage unit into which information is stored at each communication by the user or the system is stored in a stack.

15. A system for conducting a dialogue with a user as claimed in Claim 14 wherein the identities of data storage units are stored in the stack in the order in which data is stored in them during the dialogue.

16. A system for conducting a dialogue with a user as claimed in any of Claims 11 to 15 wherein the information stored in the data storage units in accordance with each communication of the user comprises information regarding the type and identity of the information, the extent to which the information was confirmed by the system and the system's intention for the further processing of the information.

17. A system for conducting a dialogue with a user as claimed in any of Claims 13 to 16 wherein the information stored in the data storage units during each communication by the user or the system contains links to other data storage units.

18. A system for conducting a dialogue with a user as claimed in any of the preceding Claims wherein the assignment unit is capable of detecting a shift between the subject-matter of a first communication by the user and a second communication by the user during the dialogue.

19. A system for conducting a dialogue with a user as claimed in Claim 18 wherein the assignment unit assigns the first communication to a first processing unit according to the communication's semantic content and assigns the second communication to a second processing unit, being of different identity to the first processing unit, in the event that the subject-matter of the second communication differs from that of the first communication.

20. A system for conducting a dialogue with a user as claimed in Claim 19, wherein the assignment unit is capable of deferring the assignment of the second communication to the second processing unit until the first processing unit has completed its task.

21. A system for conducting a dialogue with a user as claimed in any of the preceding Claims wherein the system is capable of retrieving information stored in at least one of the data storage units as a result of an earlier communication by the user or system and combining this information with information derived from a current communication by the user or system.

22. A system for conducting a dialogue with a user as claimed in any of the preceding Claims wherein the data storage units are created during each communication of the dialogue.

23. A system for creating a dialogue with a user as claimed in any of the preceding Claims wherein the system possesses an object-oriented design.

24. A system for creating a dialogue with a user as claimed in any of the preceding Claims wherein the system is adapted to operate within the DARPA Communicator system.

25. A system for creating a dialogue with a user as claimed in any of the preceding Claims wherein the system is developed in Java.

26. A method of conducting a dialogue with a user comprising the steps of:
(a) receiving a communication from the user;
(b) assigning the communication to one of a plurality of processing units, each of which comprises one or more processing rules, in accordance with the semantic content of the communication;
(c) storing information from the communication in one or more data-storage units;
(d) using one or more of the processing rules of the assigned processing unit to process the communication;
(e) forwarding a response to the user; and
(f) repeating the above steps until the user fails to issue further communications or indicates that the dialogue is terminated.

27. A method of conducting a dialogue with a user as claimed in Claim 26 wherein the step of processing the user's communication comprises the further steps of:
(d1) requesting further information from the user if needed; and
(d2) accessing a data repository if needed.

28. A method of conducting a dialogue with a user as claimed in Claim 26 or Claim 27 wherein the method includes a further step of confirming the communication from the user before processing the communication in accordance with the one or more processing rules of the assigned processing unit.

29. A method of conducting a dialogue with a user as claimed in Claim 28 wherein the step of confirming the user's communication comprises an implicit or an explicit confirmation.

30. A method of conducting a dialogue with a user as claimed in any of Claims 26 to 29 wherein the method includes a step of retrieving information from a previous communication stored in one or more of the data-storage units and combining the information with information from the current communication to enable the completion of a task associated with the previous communication.

31. An automatic booking system employing the system for conducting a dialogue with a user as claimed in any of Claims 1 to 25.

32. An automatic booking system as claimed in Claim 31 when dependent upon Claim 8 wherein the one or more data repositories contain information regarding accommodation.

33. An automatic booking system as claimed in Claim 31 when dependent upon Claim 8 wherein the one or more data repositories contain information regarding current events.

34. An automatic booking system as claimed in Claim 31 when dependent upon Claim 4, wherein the processing units includes at least one processing units adapted to acquire payment details from a user.

35. A vehicle control system employing the system for conducting a dialogue with a user as claimed in any of Claims 1 to 25.

36. A system for conducting a dialogue with a user as hereinbefore described with reference to the accompanying Figures and Table.
